# EUROPEAN PATENT APPLICATION

(11) **EP 1 157 797 A2**
(43) Date of publication of application: **28.11.2001**
(21) Application number: 00118826.7
(22) Date of filing: 31.08.2000
(51) Int. Cl.: B28B 13/04, B65G 49/08, B28B 11/04

(54) **Holding device for objects particularly crockery**

(30) Priority: 31.08.1999 IT MO990176
(71) Applicant: Vamofin S.N.C. di Vaccari Emma & C., 41042 Fiorano Modenese (Modena) (IT)
(72) Inventor: Vandelli, Pierino, 41053 Maranello (Modena) (IT)
(74) Representative: Luppi, Luigi

(57) **Abstract**

Holding device for holding objects, comprising holding means (2, 20) for holding an object (5) provided with a contact surface (4) with said object (5), vacuum means (2, 12, 14) suitable for creating a vacuum to cause said object (5) to adhere to said holding means (2, 20) only at said contact surface (4).

## Description

The invention relates to a holding device for objects, in particular crockery, particularly but not exclusively, for supporting plates, tureen, or the like, during glazing.

From EP-A-0341387 a machine for glazing clay and porcelain objects is known comprising a carrying device to which the objects to be glazed are fixed, said objects being subsequently dipped into a glazing bath. The carrying device comprises a supporting arm provided at one end thereof with a container in which a prefixed amount of glaze is placed. Into said container vacuum may be obtained suitable for causing a supporting edge of a rear side of the object to be glazed, the so-called foot of the plate, to adhere to the edge of the container. The foot of the plate is placed on the edge of the aforesaid container, said edge acting as an annular supporting surface made of elastic material, so that, when vacuum is obtained in the container, the foot of the plate firmly adheres to the above-mentioned edge. The vacuum acts on the whole portion of the surface of the plate enclosed within said annular supporting surface, which may be reached, therefore, only from the inside of the container.

The plate, vacuum-fixed to the edge of the container, is glazed by dipping into a glazing tank. Since the bottom of the plate is not in contact with the glazing bath, said bottom is decorated by the glaze contained in said container, bringing this glaze into contact with the bottom of the plate by gravity, when the container and the plate held thereon are turned over for being inserted into the glazing tank. This fact causes the drawback that the glaze used for glazing the bottom of the plate is different from the glaze contained in a glazing tank which is used to glaze the remaining surface of the plate.

The glaze used for glazing the bottom may, therefore, differ in tone and viscosity with respect to the glaze contained in the tank. Therefore, the glazed plate may show differences in tone or, however, in aesthetic appearance, between the bottom and the remaining part of the glazed surface, which causes finishing defects in the finished plate.

Furthermore, the glaze included in the container is kept in touch with the bottom to be glazed for a time considerably longer than the time during which the glaze contained in the tank is kept in touch with the remaining surfaces of the plate.

This fact causes different absorptions of glaze between the bottom and the remaining part of the plate and, consequently, a non-uniform finish of the plate. Furthermore, owing to the longer contact between the glaze and the bottom of the plate, the bottom may show a defect consisting in a concentrically wavy glaze disposition.

When a plate has been glazed and the container has been carried back to its initial position to deliver the glazed plate and to be loaded with another plate to be glazed, the used glaze has to be re-integrated into the container. Controlling the amount of glaze in the container is very difficult, since, if the amount of glaze included in the container decreases beyond an acceptable limit, the bottom of the plate may be not completely glazed, while if the aforesaid amount of glaze increases, the excess glaze may be sucked up into the vacuum circuit, with a danger that the vacuum means are clogged.

A further drawback is that the vacuum obtained in the container acts on the whole surface of the bottom encircled by the supporting edge and therefore, if the above-mentioned surface is widely broad, such as in case of large-sized plates, deformations, or breakings may take place, which may cause crashing of the plate.

According to EP-A-0341387 the bottom of the plate is glazed in an environment whose pressure is lower than atmospheric pressure, which modifies glaze absorption at the bottom of the plate.

The present invention is intended to find remedy to one, or more, of the above-mentioned drawbacks.

According to the present invention there is provided a holding device for objects, comprising holding means for holding an object provided with a contact surface for contacting said object, vacuum means suitable for creating a vacuum to cause said object to adhere to said holding means at said contact surface, characterized in that said vacuum means is shaped so as to create said vacuum only at said contact surface.

Owing to the invention, only a very narrow portion of the surface of the object may be submitted to vacuum, said portion being isolated from the outside, so allowing the glaze to reach the remaining part of the surface, when the plate is introduced into a glazing bath, which prevents differences in colour tone, or in aesthetic appearance, from taking place in the glazed object.

Furthermore, a plate interacts with the holding device according to the invention only at the plate foot, that is at a part which in any case has not to be glazed. Therefore, the need of cleaning the foot of the plate after glazing to prevent supports from being dirtied during firing is considerably reduced, or even eliminated.

Since the plate is held only in the portion comprising the supporting foot, it is possible to obtain a supporting frame allowing to the glaze contained in the tank to reach all the remaining parts of the plate, the bottom included, and to uniformly glaze such parts.

The holding device according to the invention may be advantageously used also for holding flexible flat objects, such as thin slab, layer, or sheet, made of glass, paper, plastic material, or the like, in place of conventional suction cups.

The invention will be shown in greater detail here below, for exemplifying and non-limiting purpose, with the aid of the attached drawings, in which:
Figure 1 is a longitudinal section of a holding device according to the invention, for supporting middle-sized plates to be glazed;
Figure 2 is an enlarged detail of Figure 1;
Figure 3 is a section like Figure 1, showing a holding device for large-sized plates;
Figure 4 is a top view of the device of Figure 3;
Figure 5 is a section like Figure 1, showing a holding device for small-sized plates;
Figure 6 shows various operating positions of the holding device according to the invention;
Figure 7 is a section like Figure 2, showing a variation of the annular element of the holding device.

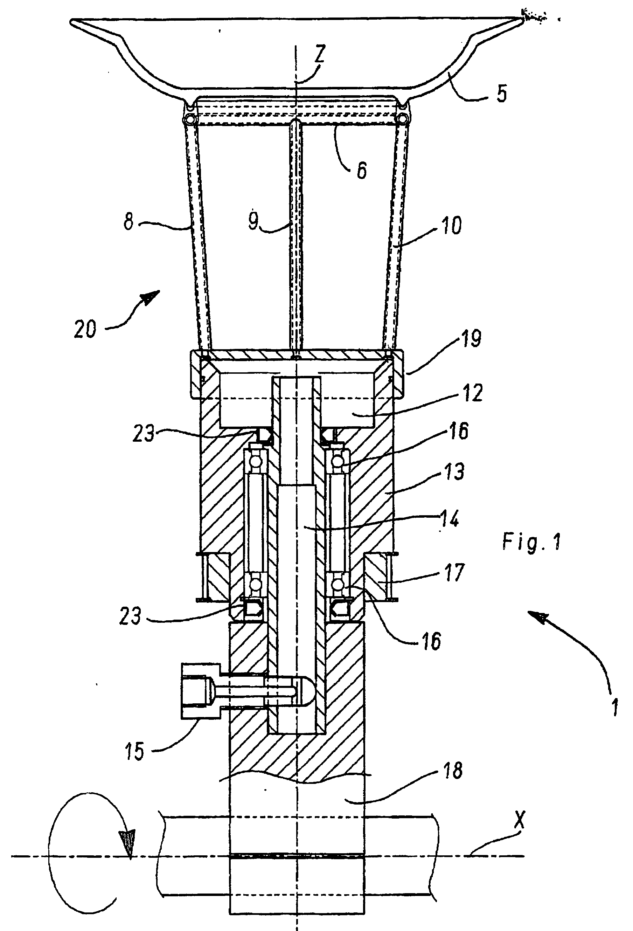

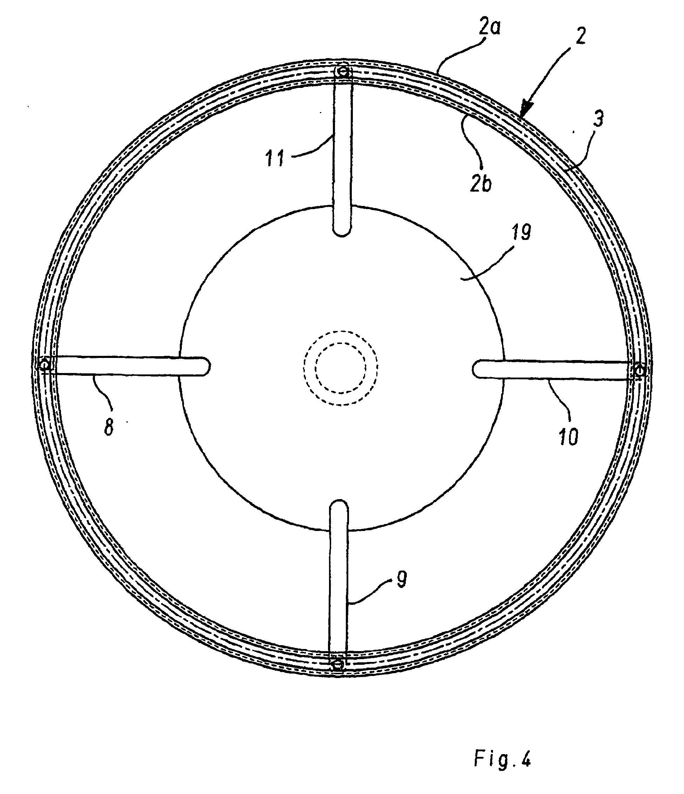

With reference to Figures 1, 2 and 4, the holding device 1 comprises an elastic annular element 2 provided with concentric peripheral lips 2a, 2b, defining a groove 3 into which a foot 4 of a plate 5 may be inserted. The walls of the annular groove 3 define a contact surface between the holding device 1 and the plate 5. The elastic annular element 2 is fitted on a tubular annular support element 6.

In Figure 7 an annular element 2 is shown obtained according to a preferred version, such annular element 2 comprising a portion 2c suitable for completely surrounding the tubular annular support element 6 to prevent the annular element 2 from accidentally disengaging from the tubular annular support element 6, during the working cycle.

The support element 6 is provided with a plurality of holes communicating with the inside of the elastic annular groove 3 through respective ducts 7 obtained in the thickness of the annular elastic element 2.

The support element 6 communicates with a first end of a plurality of further support elements 8, 9, 10, 11 connected thereto so as to be preferably arranged at equal angular intervals along the circumference of the support element 6. A second end of each further support element 8, 9, 10, 11, opposed to said first end, is fixed to a closing cap 19 of a sleeve 13 and communicates with a chamber 12 obtained therein.

An end of a conduit 14 opens into the chamber 12, such conduit 14 being connectable, for example by means of a joint 15, to vacuum generating means. A pair of rolling bearings 16 is interposed between the conduit 14 and the sleeve 13 to allow the sleeve 13 to be rotated with respect to the conduit 14.

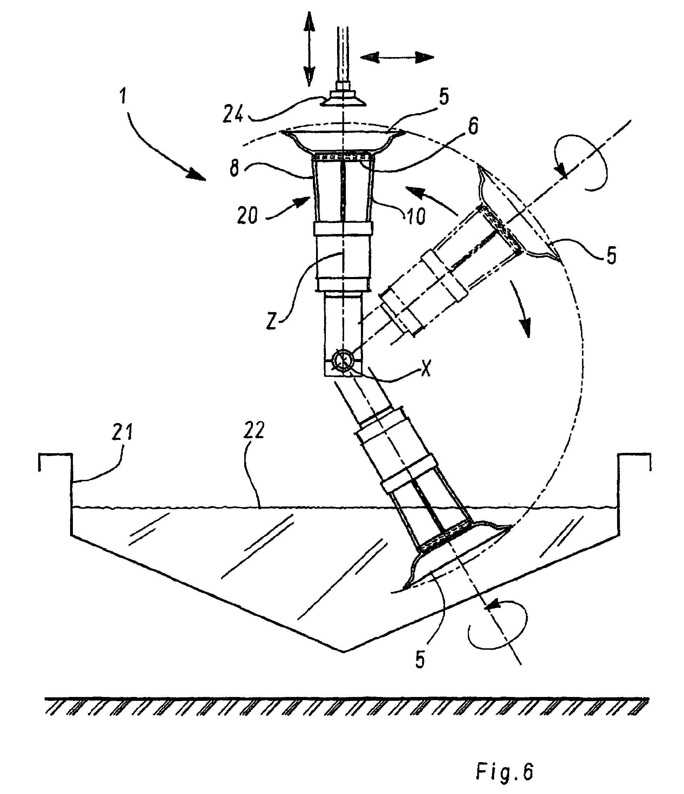

The support element 6, together with the further support elements 8, 9, 10, 11 defines permeable support means 20 offering substantially no resistance when the glaze 22 contained in a tank 21 (Figure 6) passes therethrough, as will be described in greater detail in the following. Particularly, the permeable support means 20 is shaped as a cage.

A pulley 17 driven by a belt transmission, not shown, allows the sleeve 13 to be rotated around a longitudinal axis Z thereof so causing the permeable support means 20, and the plate 5 connected thereto, to rotate.

The sleeve 13 is further provided with a pair of gaskets 23 arranged at the ends thereof and cooperating with the conduit 14 to prevent the glaze from leaking.

The conduit 14 is connected to a shaft 18, such shaft 18 being rotated by suitable rotating means, not shown, around an axis X transversal with respect to the axis Z.

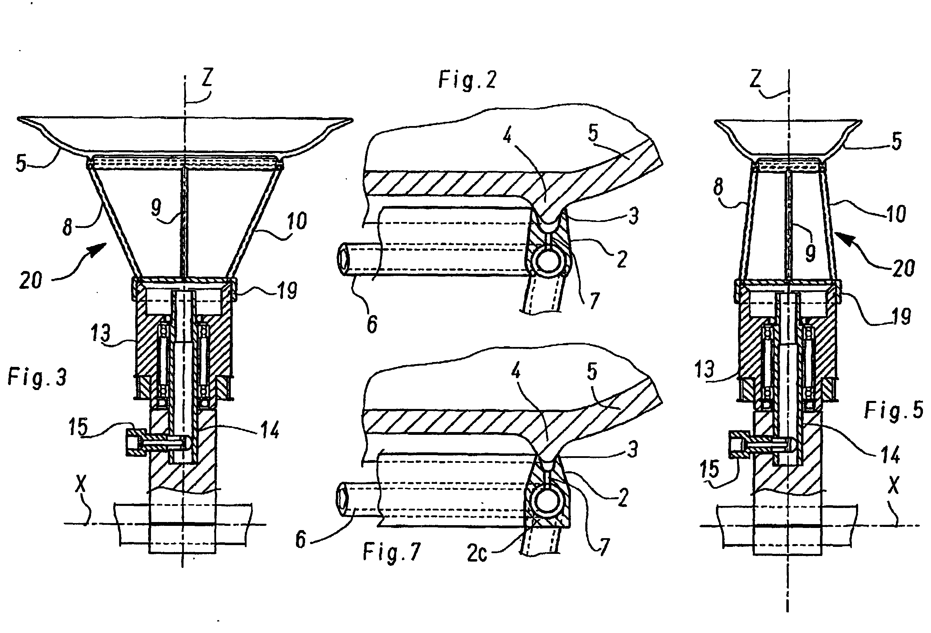

As shown in Figure 3, if the plate 5 is fairly large-sized, the further support elements 8, 9, 10, 11 may be arranged so as to diverge from the cap 19 toward the foot 4.

On the other hand, as shown in Figure 5, if the plate 5 is fairly small-sized, the further support elements 8, 9, 10, 11 may be arranged so as to converge from the cap 19 toward the foot 4.

As shown in Figure 6, according to a possible schematisation of a machine for glazing plates 5, a plate 5 is placed on the annular element 2 by suction cup transferring means 24. The annular element 2 acts as a suction cup for keeping the plate on the device 1 when, through the conduit 14, a pressure lower than the atmospheric pressure is obtained in the chamber 12, said pressure acting also in the groove 3 so holding the edge of the foot 4 therein.

The device 1 is rotated around the axis Z and then angularly rotated around the axis X to completely dip the plate 5 into the glaze 22 of the tank 21.

Owing to the permeable structure of the support means 20, the glaze 22 is able to pass through the further support element 8, 9, 10, 11 and wet also the bottom of the plate 5 for covering with glaze every portion of said plate 5 except for the edge of the foot 4 which is protected by the groove 13 and therefore is not subjected to the contact with the glaze 22.

When the plate 5 has been kept in the glaze 22 for a time suitable for glazing, the device 1 is angularly rotated around the axis X in the opposite direction to be brought back to the initial position; in said initial position the rotation around the axis Z is stopped and, once the chamber 12, and thus the groove 13, have been brought back to the atmospheric pressure, the plate 5 is withdrawn by the transferring means 24.

## Claims

1. Holding device for holding objects, comprising holding means (2, 20) for holding an object (5) provided with a contact surface (4) with said object (5), vacuum means (2, 12, 14) suitable for creating a vacuum to cause said object (5) to adhere to said holding means (2, 20) at said contact surface (4), **characterized in that** said vacuum means (2, 12, 14) is shaped so as to create said vacuum only at said contact surface (4).

2. Device according to claim 1, wherein said vacuum means (2, 12, 14) comprises an annular element (2) provided with concentric lips (2a, 2b) defining a groove (3) therebetween.

3. Device according to claim 2, wherein said contact surface (4) is insertable into said groove (3).

4. Device according to any one of the preceding claims, wherein said contact surface (4) comprises a foot area of a crockery element (5).

5. Device according to any one of claims 2 to 4, wherein said annular element (2) is fixed to an end of liquid permeable support means (20).

6. Device according to claim 5, wherein another end of said permeable support means (20) is associated with a body (13) provided with a cavity (12).

7. Device according to claim 6, wherein said cavity (12) communicates with vacuum means through a vacuum conduit (14) opening into said cavity (12).

8. Device according to claim 6, or 7, wherein said body (13) is provided with coupling means (17) for allowing said body (13) to be rotated around a longitudinal axis (Z) thereof.

9. Device according to any one of claims 6 to 8, wherein said body (13) is further connected to a shaft (18) for rotating said body (13) around a transversal axis (X).

10. Device according to any one of claims 5 to 9, wherein said liquid permeable support means (20) comprises a cage-shaped frame (6, 8, 9, 10, 11, 19).

11. Device according to claim 10, wherein said support means (20) comprises a further annular element (6) suitable for being shapingly coupled to said annular element (2).

12. Device according to any one of claims 6 to 11, wherein said annular element (2) is provided with openings (7) making said groove (3) communicate with said cavity (12) through duct means (8, 9, 10, 11).

13. Device according to claim 12, wherein said duct means (8, 9, 10, 11) cooperates to form said cage-shaped frame.

14. Device according to claim 12, or 13, wherein said duct means (8, 9, 10, 11) is fixed to a cap (19) of said body (13).

15. Holding means, comprising an annular element (2) provided with concentric lips (2a, 2b) defining a groove (3) therebetween suitable for receiving a holding portion of an object (4).
